# EUROPEAN PATENT SPECIFICATION

(11) **EP 4 357 223 B1**
(45) Date of publication and mention of the grant of the patent: **27.05.2026**
(21) Application number: 23200413.5
(22) Date of filing: 28.09.2023
(51) Int. Cl.: B62D 21/00

(54) **MOLDED COMPONENT, EXTERIOR REAR VIEW ASSEMBLY AND METHOD OF ASSEMBLING**
GEFORMTE KOMPONENTE, AUSSENRÜCKBLICKANORDNUNG UND VERFAHREN ZUR MONTAGE
COMPOSANT MOULÉ, ENSEMBLE RÉTROVISEUR EXTÉRIEUR ET PROCÉDÉ D'ASSEMBLAGE

(30) Priority: 17.10.2022 DE 102022210955
(43) Date of publication of application: 24.04.2024
(73) Proprietor: Motherson Innovations Company Limited, London E14 5HU (GB)
(72) Inventor: SMIT, Matthew, Park Warfield, RG42 5AP (GB); HORNE, Steve, Gosport, PO12 2RZ (GB); LETTIS, Andrew, Chichester, PO19 8TA (GB)
(74) Representative: Isarpatent

(56) References cited:
- CN-U- 209 063 988
- CN-U- 215 621 702

## Description

### FIELD OF THE INVENTION

The present invention relates to a molded component, an exterior rear view assembly comprising such a molded component and a method of assembling such an exterior rear view assembly.

### BACKGROUND OF THE INVENTION

Exterior rear view assemblies comprise a variety of different parts, such as actuators, sensors, motors, structural components, reinforcements, etc. that each perform a specific role in order for the entirety of the exterior rear view assembly to function as required. It is therefore desirable to accommodate all these individual components within the exterior rear view assembly. As such, constraints arise with regard to said accommodation of the different components and in order to circumvent such constraints, assemblies can be configured and dimensioned specifically having different sizes and/or shapes in order to house the aforementioned different components.

In this manner, differently sized and/or shaped exterior rear view assemblies are commonplace and each require an individual design, production, tooling, etc. and/or multiple of such steps in a specific sequence in order to create a finished product, for example for use with a road vehicle.

For example, CN 209 063 988 U describes a technical scheme for an automobile rearview mirror shell comprising a framework formed through one-time injection molding. The framework comprises at least a closed outer contour area and carbon fiber layer with good strength and predefined shape and size.

### SUMMARY OF THE INVENTION

In view of the above, an object of the present invention is to provide an improved molded component for an exterior rear view assembly allowing for adaption to differently shaped and/or sized exterior rear view assemblies, and a corresponding improved method of manufacturing an exterior rear view assembly.

Accordingly, the present invention provides a molded component as recited in claim 1, an exterior rear view assembly as recited in claim 11, and a method of assembling an exterior rear view assembly as recited in claim 14.

The underlying discovery on which the present invention is based is therefore that the components used within exterior rear view assemblies of different sizes are not necessarily manufactured uniquely and/or individually, but may be manufactured in an adaptable way.

The idea on which the present invention is based is therefore to provide a predetermined breaking feature between two coupling sections in order to enable the coupling of the molded component to differently sized and/or shaped structural shells.

Advantageously, identically configured molded components can be adapted by means of the breaking feature in order to provide the possibility of coupling the molded component to differently sized and/or shaped structural shells. In this way, there is no need to design and manufacture a unique molded component, and in particular manufacture a unique molding form or mold, for every design, dimension and/or shape of structural shell. In this way, tooling and manufacturing costs are effectively reduced through the reduction of the variety and/or diversity of parts. Especially, the very wasteful and expensive manufacturing of multiple unique molding forms for the molding process of the molded component can be avoided and at the same time the amount of molding forms for the molding process that are required to be manufactured is effectively reduced. This also advantageously reduces manufacturing set-up times and/or manufacturing preparation times.

Furthermore and in this way, it is avoided that different incompatible assembly shapes and/or sizes hinder the use of same components for different assemblies due to size, design, package constraints.

The first coupling section and second coupling section respectively can be configured with a similar size or can be configured so that one coupling section is larger, in particular significantly larger, than the other coupling section. In this way, the molded component can be used in a variety of different structural shells and design constraints can be minimized. The coupling of the first coupling section and second coupling section to a structural shell can be realized with any variety of common, in particular dedicated, attachment elements. The attachment elements can for example be screws, clips, bolts, rivets, glue, weld seams or functionally equivalent attachment elements. Additionally, the attachment elements can be configured as part of and/or integral with the first coupling section and/or second coupling section. In this way, the amount and/or variety of parts of the molded component is reduced.

In a preferred embodiment, the molded component is configured as an internal skeleton structure of a road vehicle exterior rear view assembly. The internal skeleton structure can be configured and dimensioned in order to function as an internal support element. Additionally, the internal skeleton structure can be configured as a frame or framework to withstand external forces and provide added strength and durability for an exterior rear view assembly. In this way, a skeleton structure is provided, which exhibits a lightweight characteristic and is not bulky, while providing strength and large amounts of free space.

In a preferred embodiment, the molded component is configured as an internal skeleton structure comprising a first and second coupling section, wherein the first coupling section is smaller than the second coupling section. Furthermore, the internal skeleton structure comprises a predetermined breaking feature arranged in between said first coupling section and second coupling section. The first coupling section can be essentially configured as a tab, in particular with two limbs essentially arranged in an L-shape, wherein a first limb of the first coupling section comprises an attachment element for attaching the molded component or the first coupling section to a structural shell, and wherein a second limb of the first coupling section comprises a section in close proximity to the breaking feature. In this way, a relatively small first coupling section is provided that can be easily adapted in position for coupling the molded component or first coupling section to a structural shell of a different size or shape.

According to an embodiment, the second coupling section can be configured to be larger than the first coupling section. Therefore, the second coupling section is configured to accommodate all or the majority of the components used within an exterior rear view assembly. In this way, the adapters and/or mounting points arranged on and/or within the second coupling section can be used in the first state and second state of the molded component, as the adapters and/or mounting points and the relative distances between each other remain unchanged in both states. Additionally, the second coupling section can essentially exhibit a concave form, which can be configured to be mounted and/or recessed within a structural shell, e. g. in the area of a recess provided in the structural shell. Similarly, the second coupling section also comprises a section in close proximity to the breaking feature. Furthermore, the second coupling section can comprise multiple attachment elements for coupling the molded component or the second coupling section to a structural shell.

In an embodiment, the first coupling section and second coupling section can be configured to exhibit a surface that corresponds to the inner surface-area of a structural shell in order to ensure proper fitting and a secure coupling of the molded component.

The predetermined breaking feature can be configured to be broken and/or otherwise separated, for example cut, by hand, in particular with ease. In this way, there is no necessity for a designated tool that is configured to separate the first coupling section and second coupling section. Additionally, the breaking feature, and in particular the structural connection provided by the breaking feature, can be configured to exhibit sufficient strength and/or stability, in particular to allow the component to not be at risk of separating during regular handling, during coupling to a structural shell, or after being coupled to a structural shell.

Additionally, the breaking feature can be configured and dimensioned in relation to the size of the individual first coupling section and second coupling section in the second state of the molded component. In this way, a single parameter relating to the breaking feature is provided that can be manipulated in order to meet requirements or constraints relating to size or design of the molded component. Furthermore, the course of the breaking feature can be routed in such a way in order for the first coupling section and second coupling section, in the second state of the molded component, to at least partially fit and/or fold into each other. In this way, a molded competent is provided that can exhibit a smaller size in the second state of the molded component than in the first state of the molded component.

In another embodiment, the breaking feature can be configured as a pivoting feature, such as a film or living hinge, by being configured to only be broken along a fraction of its length. In particular, the pivoting feature can be configured in the second state of the molded component to not entirely separate the first coupling section and second coupling section, but only with regard to a certain degree of freedom. In this way, a pivot point can be provided that allows the user to reorient and/or tilt the first coupling section and second coupling section with respect to each other, in order to adapt the molded component to another type of structural shell for coupling in at least two parts. The two parts can therefore be tilted and/or pivoted with respect to each other while still being, in particular at least partially, structurally connected by means of the breaking feature. In this way, a further functionality of the molded component is provided in order to facilitate coupling to a structural shell.

The first state of the component can be defined by the structural connection of the first coupling section and second coupling section. In other words, the first state of the component can be defined by the breaking feature being unbroken and the molded component in the first state is in one part. In this way, the connection of the first coupling section and second coupling section is still structurally rigid and stays rigid during the coupling to the structural shell.

The second state of the component can be defined by the adapted position of the first coupling section and/or second coupling section, especially with respect to each other. In other words, the second state of the component can be defined by the breaking feature being, in particular at least partially, broken. Accordingly, the molded component in the second state is in at least two parts. Furthermore, the first coupling section and/or second coupling section are adapted in position with respect to each other and/or a shared axis corresponding to the extension or course of the breaking feature. The adaption in position of the first coupling section and/or second coupling section can be an adaption in a shared geometric plane or multiple geometric planes, in particular arranged in parallel. Furthermore, the first coupling section and/or second coupling section can be angled with respect to each other or a shared axis, in particular in addition to the adaption in position in a geometric plane or multiple geometric planes.

Additionally, configurations of the molded component being able to be separated into more than two parts, for example three parts, are also feasible. Such configurations of the molded component can be easily realized through adaptation of the course of the breaking feature, in particular through the addition of a fork in the course of the breaking feature, and/or through the molded component comprising more than one breaking feature.

Advantageously, the exterior rear view assembly is in particular a rear view mirror for a road vehicle. The structural shell of the exterior rear view assembly can be configured as a mirror shell and/or as the outermost cover of an exterior rear view assembly, which is in contact with the environment. Additionally, the structural shell can be configured to provide structural support for the molded component coupled to it and protection from said elements and/or the environment. Preferably, the structural shell comprises a surface that can be painted.

In another embodiment, the exterior rear view assembly can be configured as a rear view sensor or camera or the like and the structural shell of the exterior rear view assembly can be configured as a sensor or camera shell.

Advantageously, the method of assembling the exterior rear view assembly enables the molded component to be coupled to structural shells of different sizes. Additionally, the method provides a simple, easily controllable, easily carried out and overall efficient way of determining if the molded component has to be separated by means of the breaking feature in order to be coupled to the structural shell.

The first coupling portion and second coupling portion can each be configured with a similar size or be configured so that one coupling portion is larger, in particular significantly larger, than the second coupling portion. The coupling of the component to the first coupling portion and second coupling portion can be realized with any variety of common, in particular dedicated, attachment elements. The attachment elements can be screws, clips, bolts, rivets or the like. Additionally, the attachment elements can be configured as part of and/or integral with the first coupling portion and second coupling portion. In this way, the amount and/or variety of parts of the molded component is reduced.

In addition, the first coupling portion and second coupling portion can be configured to have a surface-area and/or coupling area, which corresponds to the surface-area of the first coupling section and second coupling section in order to ensure proper fitting and a secure coupling of the molded component to the structural shell. Additionally, the coupling of the first coupling section and second coupling section to the first coupling portion and second coupling portion can be configured to be gapless in order to avoid moisture ingress and/or foreign body build-up, which could cause deterioration of the exterior rear view assembly during use.

The distance between the first coupling portion and second coupling portion can be any distance between two predetermined points, wherein one point is in an area that corresponds to the first coupling portion and the other point is in an area that corresponds to the second coupling portion. Preferably, the distance between the first coupling portion and second coupling portion is measurable or marked in a way that makes it easy to identify.

The distance between the first coupling section and second coupling section of the molded component in the first state can be any distance between two points, wherein one point is in an area that corresponds to the first coupling section and the other point is in an area that corresponds to the second coupling section. Preferably, the distance between the first coupling section and second coupling section is measurable or marked in a way that makes it easy to identify.

Advantageously, the distance between the first coupling section and second coupling section of the molded component is comparable to the distance between the first coupling portion and second coupling portion of the structural shell. Preferably, the measurement of the respective distances is made from a start point to an end point that are comparable on the molded component and the structural shell, for example from the regional center of the first coupling section/first coupling portion to the regional center of the second coupling section/second coupling portion.

Advantageously, the coupling of the first coupling section and second coupling section to the first coupling portion and second coupling portion can be facilitated and simplified by employing a form-fitting system, for example a poke-yoke system. In this way, incorrect or faulty orientations and/or combinations of portion and section can be avoided effectively.

Advantageous or preferred features of the invention are recited in the dependent claims.

In an embodiment, the component in the first state is configured to be coupled to a structural shell of a first size and/or the component in the second state is configured to be coupled to a structural shell of a second size. In this way, a component is provided which enables the user to couple the component to structural shells of different sizes when the component is configured in different states. The sizes of the structural shells can be chosen in accordance with specific requirements and can exemplarily range from smaller motorcycle structural shells to larger truck structural shells.

In an embodiment, the structural shell of the first size is smaller than the shell of the second size. In this way, a further functionality of the component is provided, as the component is able to change its size in order to fit into a larger structural shell without the need of having to provide a unique component for said larger structural shell.

In an embodiment, the breaking feature is arranged in between the first coupling section and second coupling section. Preferably, the breaking feature extends linearly in order to facilitate the separation of the first coupling section and second coupling section. In this way, a user can use the first coupling section and second coupling section as levers in order to adapt position by tilting or separating the first coupling section and second coupling section. Additionally, the first coupling section and second coupling section can comprise marks or grooves on their respective surfaces to indicate advantageous locations where a user or worker should place their hands or tools when attempting to separate or adapt the position of the first coupling section and second coupling section of the molded component by means of the breaking feature. In this way, a safe and easy to use instruction is provided for a potential user or worker, which can reduce damage to the molded component or injury of the user or worker due to incorrect operation of the breaking feature.

Preferably, the breaking feature is positioned in order to be easily identifiable. In this way, it is possible to check if the breaking feature is still intact and not faulty, in order to verify if the component in the first state can be coupled to a structural shell. Alternatively, the predetermined breaking feature can extend in a curved line, in particular an irregular spline, in order to be adapted to specific form and design constraints of the molded component.

In an embodiment, the breaking feature is formed as a seam, in particular a material tapering. In this way, a breaking feature is provided which can be easily broken if it is required in order to adapt position by tilting or separate the first coupling section and second coupling section. Additionally, the breaking feature provides sufficient stability in the first state of the molding component for safe handling. Alternatively, the breaking feature can be formed as one or multiple perforations comprising one or multiple holes along a predetermined line that corresponds to the expansion or course of the breaking feature.

In an embodiment, the molded component comprises at least one guiding element configured to guide the position of the component for the first state and second state. Preferably, the component comprises a first guiding element arranged on the first coupling section configured to guide the position of the first coupling section for the first state and second state and/or the component comprises a second guiding element arranged on the second coupling section configured to guide the position of the second coupling section for the first state and second state. In this way, elements are provided, which aid in the positioning of the individual components by an individual or machine during the assembly process of the molded component and/or exterior rear view assembly, which reduces assembly time and in turn increases efficiency. Multiple guiding elements arranged on the first coupling section and/or second coupling section of the molded component are also conceivable. Preferably, the first guiding element and second guiding element are configured as a first position guiding element and second position guiding element respectively.

In an embodiment, the first coupling section and/or second coupling section comprises at least one positioning element configured to define a relative position of the first coupling section and/or second coupling section to each other respectively. In this way, the positioning element is configured to define the relative orientation, relative alignment, relative position, distance between and/or angle between the first coupling section and second coupling section of the molded component. Moreover, the second state of the molded component can be defined independently of the structural shell. Furthermore, the positioning element can comprise a form coding element, which corresponds to another form coding element arranged on the first coupling section and/or second coupling section. The form coding elements of the positioning element, first coupling section and/or second coupling section only fit together in matching configurations. Accordingly, mixing-up of parts in a manufacturing or repair process is effectively avoided.

In an embodiment, the molded component comprises at least one attachment element configured to receive at least one part. In this way, a physical feature is provided, which enables a variety of different functionalities relating to an exterior rear view assembly. The attachment element can be configured as a knob, rivet, clip, bolt, screw, plates with an aperture, clamp, slot and/or angle. Additionally, the molded component can comprise multiple different sets of attachment elements, which are formed and arranged specifically in order to house and/or mount different devices to the exterior rear view assembly or perform different functions. For Example, the part received by the at least one attachment element can be any actuator, sensor, brace, device or combination thereof.

In a preferred embodiment, the molded component comprises multiple attachment elements, in particular 3 or 6 attachment elements. The multiple attachment elements can be spaced equally around the perimeter of the molded component or be grouped together around the perimeter of the molded component in order to perform a specific function. Additionally or alternatively, the multiple attachment elements can be arranged within the area of the molded component, at a distance from the perimeter. In this way, a versatile attachment configuration is created in order to adapt to any requirements.

In an embodiment, the first state and second state of the component are based on a breaking system that comprises the breaking feature. In this way, a breaking system is provided, which enables the possibility of coupling the molded component to differently sized and/or shaped structural shells. In this way, tooling and manufacturing costs are effectively reduced through the reduction of the variety and/or diversity of parts.

In an embodiment, the component is configured to carry and electronically contact actuators and sensors for use within an exterior rear view assembly. The actuators and sensors can perform a variety of different functions and can be configured as variety of different devices. Examples for an actuator or sensor are a camera actuator, a camera heater or the like. Other examples for functions and devices are also illumination devices, for example any kind of light module like an external light module, an internal light module, a front light, a back light, a fog light, a brake light, an acceleration light, a turn signal, a logo lamp, a front area illumination light, a ground illumination light, a puddle light, a flash light, a navigation light, a position light, an emergency light, a spotlight, a green light, a red light, a warning light, a turn signal light module, an approach light, a search light, an information light, a display and/or any combination thereof. Further examples are a tiredness detection system, a microsleep detection system, a distance and/or velocity determination system, for example a LIDAR (Light detection and ranging) system, a blind spot indicator system, a lane change assistant system, a navigation assistant system, a tracking assistant system, a human-machine interaction system, a machine-machine interaction system, an emergency and precaution assistant system, like an accident avoiding assistant system, a counter-measures assistant system, a brake assistant system, a steering assistant system, an acceleration assistant system, an escape assistant system, comprising for example an ejection seat system, a direction indicator, a blind spot indicator, an approach system, a strong braking system, an emergency braking system, a charging status indicator, a vehicle mode system, comprising for example a sports mode system, an economy mode system, an autonomous drive mode system, a sleep mode system and an anti-theft system, a vehicle locked indicator system, a vehicle stolen indicator, a warning signal system, a temperature indicator system, a weather indicator system, a traffic light signal system, a fuel status system and/or any combination thereof.

In an embodiment, the component is manufactured according to an injection molding process, and the component is manufactured in a single mold. In this way, the component is manufactured according to a highly efficient manufacturing process for high-volume production runs. Furthermore, a manufacturing process is provided with a low cost per part and high repeatability. The injection molding process also provides a large variety of different material choices from which the molded component can be manufactured. Exemplary material choices for the molded component are polyoxymethylene (POM), acrylonitrile butadiene styrene (ABS), acrylic (PMMA), polyamide (PA, Nylon), polypropylene (PP), polyurethane (PU), polyvinyl chloride (PVC), reinforced composites, etc. Furthermore, post processing of the molded component is effectively reduced to a minimum due to the high quality of the injection-molded component. Moreover, manufacturing the molded component in a single mold effectively avoids possible multiple time-consuming steps and/or expensive molds that would be necessary for the individual sub-components.

In an embodiment of the exterior rear view assembly, the structural shell is manufactured of a fiber composite material, in particular a carbon fiber composite material. Further exemplary fiber composite materials are glass fibers, ceramic fibers, aramid fibers, etc. In this way, the structural shell exhibits a high strength in order to protect the sensitive components of the exterior rear view assembly. Additionally, the structural assembly has a low weight in order to facilitate easy handling during the manufacturing process. Alternatively, the structural shell can be manufactured of a metal or metal alloy depending on different requirements.

In an embodiment of the exterior rear view assembly, the structural shell comprises a first coupling portion and second coupling portion. Furthermore, the first coupling section is configured to be coupled to a first coupling portion and the second coupling section is configured to be coupled to a second coupling portion. In this way, designated coupling pairs (section and portion) are provided as part of the assembly in order to ensure proper, safe, and secure attachment of the molded component to the structural shell.

The above embodiments can be combined with each other as desired, if useful. Further possible embodiments, further configurations and implementations of the invention also include combinations, not explicitly mentioned, of features of the invention described herein with respect to the embodiments. In particular, the skilled person will thereby also add individual aspects as improvements or additions to the respective basic form of the present invention.

### BRIEF DESCRIPTION OF THE DRAWINGS

For a more comprehensive understanding of the invention and the advantages thereof, exemplary embodiments of the invention are explained in more detail in the following description with reference to the accompanying drawing figures, in which like reference characters designate like parts and in which:
- Figs. 1A, 1B: show a schematic representation of a molded component in a first state and a second state;
- Fig. 2: shows a front view of an exterior rear view assembly according to an embodiment with a molded component in a first state;
- Fig. 3: shows a front view of an exterior rear view assembly according to another embodiment with the molded component in a second state; and
- Fig. 4A, 4B: show a schematic representation of a molded component according to a an embodiment in a first state and a second state;
- Fig. 5: shows a flow chart of a method of assembling an exterior rear view assembly.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the resulting advantages of the invention will be readily appreciated as they become better understood with reference to the following detailed description.

It will be appreciated that common and/or well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

### DETAILED DESCRIPTION OF EMBODIMENTS

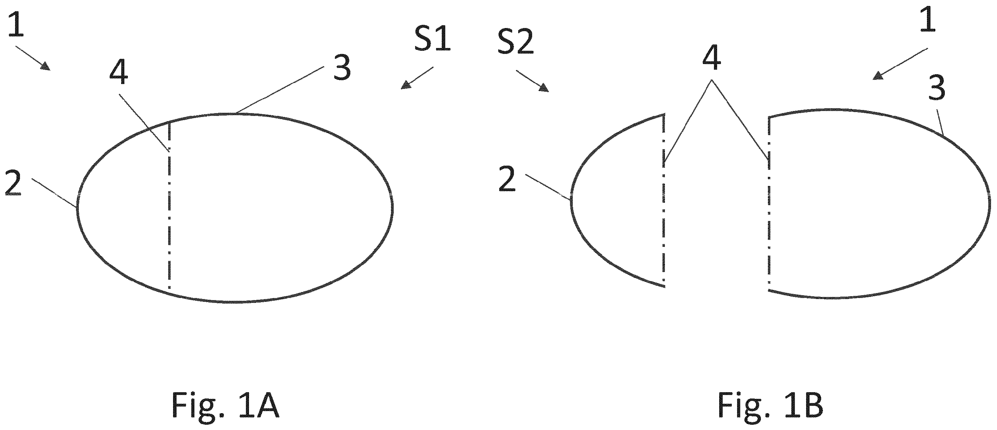

Fig. 1A shows a schematic representation of a molded component 1 in a first state S1. Fig. 1B shows a schematic representation of the molded component 1 in a second state S2.

The shown schematic representation depicts a strongly simplified version of the molded component 1 in two exemplary states S1, S2. The first state S1 of the molded component 1 is shown in Fig. 1A and the second state S2 of the molded component 1 is shown in Fig. 1B.

In the shown representation, the molded component 1 is configured for use in a road vehicle exterior rear view assembly 10. In particular, the molded component 1 may be configured as an internal skeleton structure.

The molded component 1 comprises a first coupling section 2, a second coupling section 3 and a predetermined breaking feature 4. The first coupling section 2 and second coupling section 3 are each configured to be coupled to a structural shell (not shown).

The breaking feature 4 is shown as a straight dash-dotted line in Fig. 1A and is formed and configured in such a way to allow for coupling the component 1 to the structural shell in the two different states S1, S2. In the first state S1 of the molded component 1, the breaking feature 4 structurally connects the first coupling section 2 and second coupling section 3 for coupling to the structural shell in one part.

In the second state S2 of the molded component 1 the first coupling section 2 and/or second coupling section 3 are adapted in position by means of the breaking feature 4 in a predefined way for coupling to the structural shell in at least two parts.

Exemplarily, as shown in Fig. 1B, the first coupling section 2 and/or second coupling section 3 are adapted in position within the plane of the page creating a gap between the first coupling section 2 and second coupling section 3 in Fig. 1B The respective remainders of the breaking feature 4 are now schematically shown as two straight dash-dotted lines.

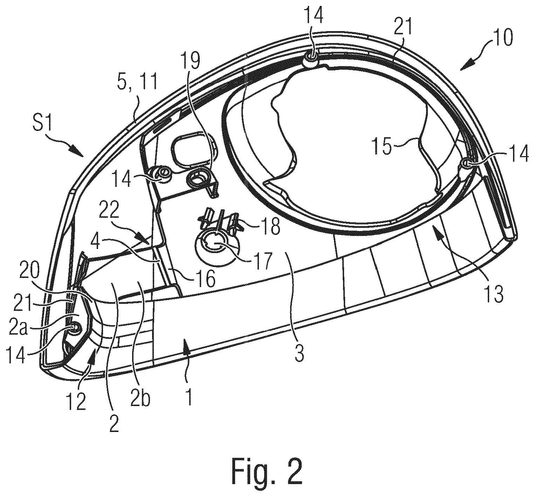

Fig. 2 shows a front view of an exterior rear view assembly 10 according to an embodiment with a molded component 1 in a first state S1.

In this embodiment, the exterior rear view assembly 10 comprises a molded component 1 configured as an internal skeleton structure and a structural shell 11 of a first size 5. The shown exterior rear view assembly 10 is configured as an assembly for a road vehicle. Additionally, the molded component 1 is in the first state S1 and is configured to be coupled to the structural shell 11 of the first size 5 in one part.

In the exemplary embodiment, the structural shell 11 is configured as a light-weight component and can be manufactured of a fiber composite material, in particular a carbon fiber composite material.

The shown molded component 1 comprises a first coupling section 2, second coupling section 3 and a breaking feature 4. The breaking feature 4 is arranged in between the first coupling section 2 and second coupling section 3 and is formed as a linear seam that is realised as a material tapering.

It should be noted that in other embodiments, the breaking feature 4 could be arranged at a different position, of course. The exact position of the breaking feature 4 can be utilized to define the size of the first coupling section 2 and second coupling section 3 in the second state S2 of the molded component 1. Additionally, the breaking feature 4 is shown as a part of the breaking system 22.

The structural shell 11 comprises a first coupling portion 12 and a second coupling portion 13. In the shown embodiment, the first coupling section 2 is coupled to the first coupling portion 12 and the second coupling section 3 is coupled to the second coupling portion 13.

The first and second coupling portion 12 are integrated into the structural shell and can comprise a variety of different attachment mechanisms in order to receive the first coupling section 2 and second coupling section 3. The attachment mechanism can be configured integral with the coupling sections 2, 3 and/or the coupling portions 12, 13.

As shown, in the present exemplary embodiment, the first coupling section 2 is smaller than the second coupling section 3. Furthermore, the first coupling section 2 is formed having an L-shape with a first limb 2a and a second limb 2b. The first limb 2a is arranged opposite to the second coupling section 3 with respect to the breaking feature 4 and comprises an attachment element 14. As shown in Fig. 2, the first limb 2a is arranged partly behind a lip 20 of the structural shell 11 that is arranged on the lower edge of the structural shell 11.

Furthermore, the second limb 2b is arranged extending towards the second coupling section 3 and comprises a section that is in close proximity to the breaking feature 4 and essentially extends in parallel to the lip 20 from the first limb 2a towards the second coupling section 3. The breaking feature 4 is arranged proximal to the distal end of the second limb 2b.

Moreover, the component 1 comprises a first and second guiding element 21. The guiding elements 21 are arranged on the first coupling section 2 and second coupling section 3. The guiding element 21 on the first coupling section 2 is configured as a concavely curved flange, with respect to the centre of the first coupling section 2, which contacts the inner wall of the structural shell 11, and therefore guides the first coupling section 2. Similarly, the guiding element 21 on the second coupling section 3 is also configured as a concavely curved flange, with respect to the centre of the second coupling section 2, which contacts the inner wall of the structural shell 11, and therefore guides the second coupling section 2.

As shown in Fig. 2, in the present embodiment the breaking feature 4 spans the entire height of the second limb 2b. In this way, it is possible to adapt the position of the first coupling section 2 and second coupling section 3 with respect to each other and by means of the breaking feature 4.

In other embodiments, the first coupling section 2 can be formed in a variety of different ways and be shaped in order to fit the required structural shell 11.

According to the exemplary embodiment in Fig. 2, the second coupling section 3 is larger than the first coupling section 2 and is formed having an essentially oval shape. Furthermore, the second coupling section 3 comprises an aperture 15 and a projection 16 that extends towards the breaking feature 4. The shown projection 16 is formed having a tab shape with dimensions corresponding to the breaking feature 4 and the second limb 2b of the first coupling section 2. Additionally, the projection 16 is essentially arranged between the breaking feature 4 and the second coupling section 3.

Furthermore, the molded component 1 according to the embodiment is configured to carry and electronically contact actuators and sensors for use within an exterior rear view assembly 10. This is achieved by different attachment components located on and/or within the first coupling section 2 and or second coupling section 3. As shown, the second coupling section 3 comprises multiple attachment elements 14, a through hole 17, a standoff 18 and a bridge 19. These individual attachment components arranged on the second coupling section 3 each fulfil a specific role in the function of the exterior rear view assembly 10. Alternative attachment components and alternative arrangements of the attachment components can be can be configured as is required for the function of the exterior rear view assembly 10. In this way, it is possible to provide a molded component 10, which can be configured to carry and electronically contact actuators and sensors for use within a variety of different types of exterior rear view assemblies 10.

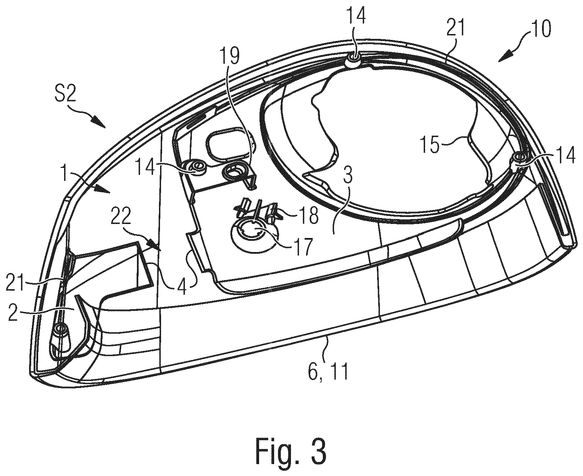

As shown, the component 1 comprises one attachment element 14 on the first coupling section 2 and three attachment elements 14 on the second coupling section 3. The attachment elements 14 on the second coupling section 3 are arranged along the perimeter and are arranged essentially equidistant from each other. As shown specifically in relation to the non-limiting embodiment of Fig. 2 and 3, the attachment elements 14 arranged on the first coupling section 2 and second coupling section 3 are configured as open top cylindrical pins.

In addition, the majority of the attachment components are arranged on the second coupling section 3 and therefore their relative position to each other is not affected if the first coupling section 2 and second coupling section 3 are adapted in position by means of the breaking feature 4. In this way, the relative position between the attachment components in the first state S1 of the molded component 1 is identical to the relative position of the attachment components in the second state S2 of the molded component 1.

Fig. 3 shows a front view of an exterior rear view assembly 10 according to another embodiment with the molded component 1 in the second state S2.

In this embodiment, the exterior rear view assembly 10 comprises a molded component 1 and a structural shell 11 of a second size 6. Additionally, the molded component 1 is in the second state S2 wherein the first coupling section 2 and second coupling section 3 have been adapted in position by means of the breaking feature 4 and are now spaced apart and independently coupled to the structural shell 11 of a second size 6 in two parts.

In the present example, the structural shell 11 of the second size 6 is larger than the structural shell 11 of the first size 5 (see Fig. 2). The depicted molded component 1 is in the second state S2, while the molded component 1 shown in Fig. 2 is in the first state S1.

As shown, the attachment elements 14 of the second coupling section 2, the aperture 15, the through hole 17, the stand-off 18 and the bridge 19 are all in the same relative position as described in relation to Fig. 2 with regard to the structural shell 11 of the first size 5. In this way, it is possible to mount the same actuators and sensors regardless of if the molded component 1 is in the first state S1 or the second state S2.

It should be noted and the skilled person will recognize that in other embodiments the different attachment components can be distributed between the first coupling section 2 and second coupling section 3, if this is required.

The guiding elements 21 guide the position of the component 1, in particular the first coupling section 2 and second coupling section 3, in the second state S2 of the molded component 1, and therefore in the same way as shown in Fig. 2.

Additionally, the adaption of position of the first coupling section 2 and/or second coupling section 3 in Fig. 3 is only exemplarily restricted to a movement along one direction and in the plane of the page. The adaption of position of the first coupling section 2 and/or second coupling section 3 in other embodiments can be configured in further or different ways as is required in order to meet size, design, package requirements, or other requirements of the exterior rear view assembly 10. Furthermore, the breaking feature 4 is shown as a part of the breaking system 22.

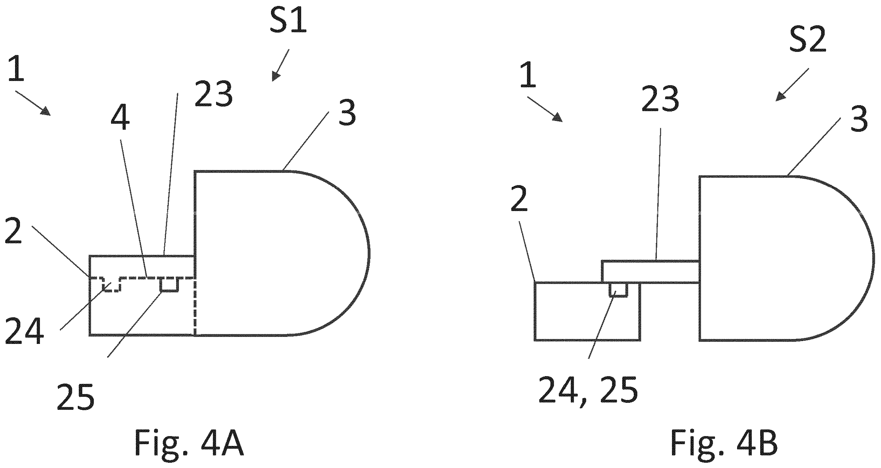

Fig. 4A shows a schematic representation of a molded component 1 according to an embodiment in a first state S1. Fig. 4B shows a schematic representation of a molded component 1 according to an embodiment in a second state S2.

The shown simplified schematic representation in Figs. 4A, 4B depicts a molded component 1 in two exemplary states S1, S2. The first state S1 of the molded component 1 is shown in Fig. 4A and the second state S2 of the molded component 1 is shown in Fig. 4B.

In the shown representation, the molded component 1 is configured for use in a road vehicle exterior rear view assembly 10 (not shown). In particular, the molded component 1 may be configured as an internal skeleton structure.

The molded component 1 comprises a first coupling section 2, a second coupling section 3 and a predetermined breaking feature 4. In the shown embodiment, the second coupling section 3 comprises a positioning element 23 configured as a protruding element, which protrudes from the second coupling section 3. The first coupling section 2 is configured having a significantly smaller size than the second coupling section 3.

In the first state S1 of the molded component 1, the first coupling section 2 is connected to the positioning element 23 of the second coupling section 3 and the second coupling section 3 itself.

The course of the breaking feature 4 follows a complex line between the first coupling section 2 and second coupling section 3, while also following along the connection of the first coupling section 2 and positioning element 23. As already stated above, the course of the breaking feature 4 can be configured freely in order to separate the first coupling section 2 and second coupling section 3, e. g. to spatial or package requirements.

Furthermore, in the shown embodiment, the positioning element 23 comprises a form coding element 24, which corresponds to the form coding element 25 arranged on the first coupling section 2. Purely exemplary, the form coding element 24 arranged on the positioning element 23 is configured as a rectangular lateral protrusion and the form coding element 25 arranged on the first coupling section 2 is configured as a recess corresponding to the aforementioned lateral protrusion. In this way, it is possible to define the relative position of the first coupling section 2 and second coupling section 3 in the second state S2 by the means of the positioning element 23, as shown in Fig. 4B.

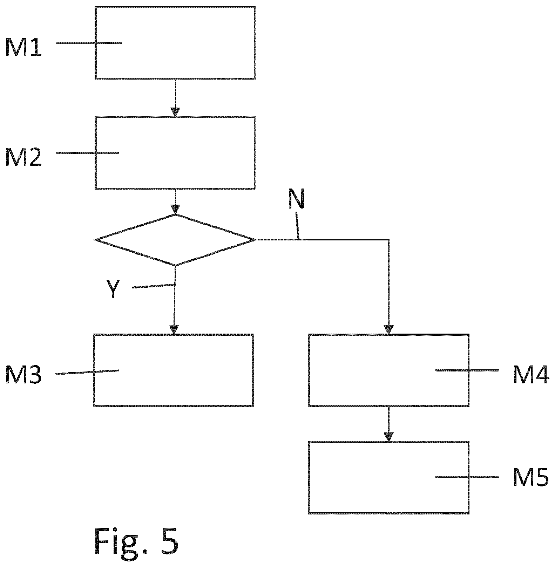

Fig. 5 shows a flow chart of a method of assembling an exterior rear view assembly 10 according to an embodiment.

The shown method of assembling comprises five method steps M1-M5. The numbering of the method steps M1-M5 only serves as a means to differentiate the different method steps M1-M5 from each other and does not imply an order in which the method steps M1-M5 have to be carried out. The order of the method steps M1-M5 can be carried out in a different order than is shown in Fig. 5.

The method comprises the step of providing M1 a structural shell 11, that itself comprises a first coupling portion 12 and a second coupling portion 13, wherein the first coupling portion 12 and the second coupling portion 13 are spaced at a distance from each other. The distance between the first coupling portion 12 and the second coupling portion 13 can be measurable or be marked in a way that makes it easy to identify.

After the step of providing M1 the structural shell 11, the method comprises the step of providing M2 a molded component comprising a first coupling section 2 and a second coupling section 3. The first coupling section 2 is configured to be coupled to the first coupling portion 12 and the second coupling section 3 is configured to be coupled to the second coupling portion 13 of the structural shell 11. Furthermore, the molded component comprises a predetermined breaking feature 4, that is formed and configured in such a way to allow for coupling the component 1 to the structural shell 11 in two different states S1, S2.

It is then to distinguish between configurations in which the distance between the first coupling section 2 and second coupling section 3 of the molded component 1 is equal (distance equal? Yes) to the distance between the first coupling portion 12 and the second coupling portion 13, and configurations in which said distance is not equal (distance equal? No) and thus different. The decision "distance equal?" is represented by the diamond-shaped box in Fig. 5.

In a first alternative course of action Y (distance equal? Yes), after the step of providing M1 the structural shell 11 and the step of providing M2 the molded component 1, if the distance between the first coupling section 2 and second coupling section 3 of the molded component 1 is equal to the distance between the first coupling portion 12 and the second coupling portion 13, the method comprises coupling M3 the molded component 1 to the structural shell 11 in a first state S1. If the molded component 1 is in the first state S1, the first coupling section 2 and second coupling section 3 are structurally connected by means of the predetermined breaking feature 4.

In a second alternative course of action N (distance equal? No), after the step of providing M1 the structural shell 11 and the step of providing M2 the molded component 1, if the distance between the first coupling section 2 and second coupling section 3 is not equal to the distance between the first coupling portion 12 and the second coupling portion 1, the method comprises the step of adapting M4 a position of the first coupling section 2 and/or second coupling section 3 by means of the predetermined breaking feature 4 and comprises the step of coupling M5 the molded component 1 to the structural shell 11 in a second state S2. If the molded component is in the second state S2, the first coupling section 2 and second coupling section 3 are adaptable in position. Thus, the step of coupling may comprise adapting the first coupling section 2 and/or second coupling section 3 in position. Furthermore, coupling may comprise attaching the first coupling section 2 and second coupling section 3 to the structural shell in the adapted position.

Even though the invention is described in relation exterior rear view assemblies for road vehicles, other applications of the invention can also be perceived, such as for vehicles that are used on the sea, in particular boats, jet skis, canoes, or the like, or in the air, in particular planes, helicopters, gliders, or the like.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### LIST OF REFERENCE SIGNS

- 1: molded component
- 10: exterior rear view assembly

- 2: first coupling section
- 2a, 2b: first limb, second limb
- 3: second coupling section
- 4: brake feature
- 5: shell of first size
- 6: shell of second size

- 11: structural shell
- 12: first coupling portion
- 13: second coupling portion
- 14: attachment element
- 15: aperture
- 16: projection
- 17: hole
- 18: stand-off
- 19: bridge
- 20: lip
- 21: guiding element
- 22: breaking system
- 23: positioning element
- 24: form-coding element
- 25: form-coding element

- S1: first state
- S2: second state
- M1-M5: method steps
- Y: first alternative course of action
- N: second alternative course of action

## Claims

1. Molded component (1), in particular internal skeleton structure, for a road vehicle exterior rear view assembly, comprising:
a first coupling section (2) and a second coupling section (3), wherein the first coupling section (2) and second coupling section (3) are each configured to be coupled to a structural shell;
a predetermined breaking feature (4), wherein the breaking feature (4) is formed and configured in such a way to allow for coupling the component (1) to the structural shell in two different states (S1, S2),
wherein in the first state (S1) of the component (1) the breaking feature (4) structurally connects the first coupling section (2) and second coupling section (3) for coupling to the structural shell in one part, and in the second state (S2) of the component (1) the first coupling section (2) and/or second coupling section (3) are adapted in position by means of the breaking feature (4) in a predefined way for coupling to the structural shell in at least two parts; and
wherein the component (1) in the first state (S1) is configured to be coupled to a structural shell of a first size (5) and/or shape and wherein the component (1) in the second state (S2) is configured to be coupled to a structural shell of a second size (6) and/or shape.

2. Molded component according to claim 1, wherein the structural shell of the first size (5) is smaller than the structural shell of the second size (6).

3. Molded component according to any of the preceding claims, wherein the breaking feature (4) is arranged in between the first coupling section (2) and second coupling section (3).

4. Molded component according to any of the preceding claims, wherein the breaking feature (4) is formed as a seam, in particular a material tapering.

5. Molded component according to any of the preceding claims, wherein the component (1) comprises at least one guiding element (21) configured to guide the position of the component (1) for the first state (S1) and second state (S2).

6. Molded component according to any of the preceding claims, wherein the first coupling section (2) and/or second coupling section (3) comprises at least one positioning element (23) configured to define a relative position of the first coupling section (2) and/or second coupling section (3) to each other respectively.

7. Molded component according to any of the preceding claims, wherein the component (1) comprises at least one attachment element (14) configured to receive at least one part.

8. Molded component according to any of the preceding claims, wherein the first state (S1) and second state (S2) of the component (1) are based on a breaking system (22),
wherein the breaking system (22) comprises the breaking feature (4).

9. Molded component according to any of the preceding claims, wherein the component (1) is configured to carry and electronically contact actuators and sensors for use within an exterior rear view assembly.

10. Molded component according to any of the preceding claims, wherein the component (1) is manufactured according to an injection molding process, and
wherein the component (1) is manufactured in a single mold.

11. Exterior rear view assembly (10) for road vehicles comprising:
a structural shell (11), in particular a mirror shell;
a molded component (1) according to one of the preceding claims 1-10 coupled to the structural shell (11).

12. Assembly according to claim 11, wherein the structural shell (11) is manufactured of a fiber composite material, in particular a carbon fiber composite material.

13. Assembly according to claim 11 or 12, wherein the structural shell (11) comprises a first coupling portion (12) and second coupling portion (13), and
wherein the first coupling section (2) is configured to be coupled to a first coupling portion (12) and the second coupling section (3) is configured to be coupled to a second coupling portion (13).

14. Method of assembling an exterior rear view assembly according to claim 11, comprising the following steps:
providing (M1) a structural shell (11) comprising a first coupling portion (12) and a second coupling portion (13),
wherein the first coupling portion (12) and the second coupling portion (13) are spaced at a distance from each other;
providing (M2) a molded component comprising:
a first coupling section (2) and a second coupling section (3), wherein the first coupling section (2) is configured to be coupled to the first coupling portion (12) and the second coupling section (3) is configured to be coupled to the second coupling portion (13); and
a predetermined breaking feature (4), wherein the breaking feature (4) is formed and configured in such a way to allow for coupling the component (1) to the structural shell (11) in two different states (S1, S2),
wherein the component (1) in the first state (S1) is configured to be coupled to a structural shell of a first size (5) and/or shape and wherein the component (1) in the second state (S2) is configured to be coupled to a structural shell of a second size (6) and/or shape;
coupling (M3) the molded component (1) to the structural shell (11) in a first state (S1), wherein the first coupling section (2) and second coupling section (3) are structurally connected by means of the predetermined breaking feature (4), if the distance between the first coupling section (2) and second coupling section (3) is equal to the distance between the first coupling portion (12) and the second coupling portion (13), or
adapting (M4) a position of the first coupling section (2) and/or second coupling section (3) by means of the predetermined breaking feature (4), and
coupling (M5) the molded component (1) to the structural shell (11) in a second state (S2), wherein the first coupling section (2) and second coupling section (3) are adaptable in position, if the distance between the first coupling section (2) and second coupling section (3) is not equal to the distance between the first coupling portion (12) and the second coupling portion (13).

## Patentansprüche

1. Geformte Komponente (1), insbesondere eine innere Gerüststruktur, für eine außenseitige Rückblickanordnung eines Straßenfahrzeugs, umfassend:
eine erste Kopplungssektion (2) und eine zweite Kopplungssektion (3), wobei die erste Kopplungssektion (2) und die zweite Kopplungssektion (3) jeweils dazu eingerichtet sind, mit einer strukturellen Schale gekoppelt zu werden;
ein zuvor festgelegtes Bruchmerkmal (4), wobei das Bruchmerkmal (4) in einer solchen Weise gebildet und eingerichtet ist, dass es eine Kopplung der Komponente (1) mit der strukturellen Schale in zwei verschiedenen Zuständen (S1, S2) erlaubt,
wobei in dem ersten Zustand (S1) der Komponente (1) das Bruchmerkmal (4) die erste Kopplungssektion (2) und die zweite Kopplungssektion (3) strukturell verbindet, um sie in einem einzigen Teil mit der strukturellen Schale zu koppeln, und in dem zweiten Zustand (S2) der Komponente (1) die erste Kopplungssektion (2) und/oder die zweite Kopplungssektion (3) mittels des Bruchmerkmals (4) in einer zuvor festgelegten Weise in ihrer Position angepasst werden, um eine Kopplung mit der strukturellen Schale in mindestens zwei Teilen herzustellen; und
wobei die Komponente (1) in dem ersten Zustand (S1) dazu eingerichtet ist, mit einer strukturellen Schale einer ersten Größe (5) und/oder Form gekoppelt zu werden, und wobei die Komponente (1) in dem zweiten Zustand (S2) dazu eingerichtet ist, mit einer strukturellen Schale einer zweiten Größe (6) und/oder Form gekoppelt zu werden.

2. Geformte Komponente nach Anspruch 1, wobei die strukturelle Schale der ersten Größe (5) kleiner ist als die strukturelle Schale der zweiten Größe (6).

3. Geformte Komponente nach einem der vorangehenden Ansprüche, wobei das Bruchmerkmal (4) zwischen der ersten Kopplungssektion (2) und der zweiten Kopplungssektion (3) angeordnet ist.

4. Geformte Komponente nach einem der vorangehenden Ansprüche, wobei das Bruchmerkmal (4) als eine Naht, insbesondere als eine Materialverjüngung, gebildet ist.

5. Geformte Komponente nach einem der vorangehenden Ansprüche, wobei die Komponente (1) mindestens ein Führungselement (21) umfasst, das dazu eingerichtet ist, die Position der Komponente (1) für den ersten Zustand (S1) und den zweiten Zustand (S2) zu führen.

6. Geformte Komponente nach einem der vorangehenden Ansprüche, wobei die erste Kopplungssektion (2) und/oder die zweite Kopplungssektion (3) mindestens ein Positionierungselement (23) umfasst, das dazu eingerichtet ist, jeweils eine relative Position der ersten Kopplungssektion (2) und/oder der zweiten Kopplungssektion (3) zueinander zu definieren.

7. Geformte Komponente nach einem der vorangehenden Ansprüche, wobei die Komponente (1) mindestens ein Befestigungselement (14) umfasst, das dazu eingerichtet ist, mindestens ein Teil aufzunehmen.

8. Geformte Komponente nach einem der vorangehenden Ansprüche, wobei der erste Zustand (S1) und der zweite Zustand (S2) der Komponente (1) auf einem Bruchsystem (22) basieren,
wobei das Bruchsystem (22) das Bruchmerkmal (4) umfasst.

9. Geformte Komponente nach einem der vorangehenden Ansprüche, wobei die Komponente (1) dazu eingerichtet ist, Aktuatoren und Sensoren zur Verwendung in einer außenseitigen Rückblickanordnung zu tragen und elektronisch zu kontaktieren.

10. Geformte Komponente nach einem der vorangehenden Ansprüche, wobei die Komponente (1) gemäß einem Spritzgussprozess hergestellt wird, und
wobei die Komponente (1) in einem einzigen Formwerkzeug hergestellt wird.

11. Außenseitige Rückblickanordnung (10) für Straßenfahrzeuge, umfassend:
eine strukturelle Schale (11), insbesondere einer Spiegelschale;
eine geformte Komponente (1) nach einem der vorangehenden Ansprüche 1-10, das mit der strukturellen Schale (11) gekoppelt ist.

12. Anordnung nach Anspruch 11, wobei die strukturelle Schale (11) aus einem Faserverbundmaterial, insbesondere einem Kohlefaserverbundmaterial, hergestellt ist.

13. Anordnung nach Anspruch 11 oder 12, wobei die strukturelle Schale (11) einen ersten Kopplungsabschnitt (12) und einen zweiten Kopplungsabschnitt (13) umfasst, und
wobei die erste Kopplungssektion (2) dazu eingerichtet ist, mit einer ersten Kopplungsabschnitt (12) gekoppelt zu werden, und die zweite Kopplungssektion (3) dazu eingerichtet ist, mit einem zweiten Kopplungsabschnitt (13) gekoppelt zu werden.

14. Verfahren zum Zusammenbauen einer außenseitigen Rückblickanordnung nach Anspruch 11, umfassend die folgenden Schritte:
Bereitstellen (M1) einer strukturellen Schale (11), die einen ersten Kopplungsabschnitt (12) und einen zweiten Kopplungsabschnitt (13) umfasst, wobei der erste Kopplungsabschnitt (12) und der zweite Kopplungsabschnitt (13) um eine Distanz voneinander beabstandet sind;
Bereitstellen (M2) einer geformten Komponente, umfassend:
eine erste Kopplungssektion (2) und eine zweite Kopplungssektion (3), wobei die erste Kopplungssektion (2) dazu eingerichtet ist, mit dem ersten Kopplungsabschnitt (12) gekoppelt zu werden, und die zweite Kopplungssektion (3) dazu eingerichtet ist, mit dem zweiten Kopplungsabschnitt (13) gekoppelt zu werden; und
und ein zuvor festgelegtes Bruchmerkmal (4), wobei das Bruchmerkmal (4) in einer solchen Weise gebildet und eingerichtet ist, dass es eine Kopplung der Komponente (1) mit der strukturellen Schale (11) in zwei verschiedenen Zuständen (S1, S2) erlaubt, wobei die Komponente (1) in dem ersten Zustand (S1) dazu eingerichtet ist, mit einer strukturellen Schale einer ersten Größe (5) und/oder Form gekoppelt zu werden, und wobei die Komponente (1) in dem zweiten Zustand (S2) dazu eingerichtet ist, mit einer strukturellen Schale einer zweiten Größe (6) und/oder Form gekoppelt zu werden;
Koppeln (M3) der geformten Komponente (1) mit der strukturellen Schale (11) in einem ersten Zustand (S1), wobei die erste Kopplungssektion (2) und die zweite Kopplungssektion (3) mittels des zuvor festgelegten Bruchmerkmals (4) strukturell verbunden werden, falls die Distanz zwischen der ersten Kopplungssektion (2) und der zweiten Kopplungssektion (3) gleich der Distanz zwischen dem ersten Kopplungsabschnitt (12) und dem zweiten Kopplungsabschnitt (13) ist, oder
Anpassen (M4) einer Position der ersten Kopplungssektion (2) und/oder der zweiten Kopplungssektion (3) mittels des zuvor festgelegten Bruchmerkmals (4), und
Koppeln (M5) der geformten Komponente (1) mit der strukturellen Schale (11) in einem zweiten Zustand (S2), wobei die erste Kopplungssektion (2) und die zweite Kopplungssektion (3) in ihrer Position anpassbar sind, falls die Distanz zwischen der ersten Kopplungssektion (2) und der zweiten Kopplungssektion (3) gleich der Distanz zwischen dem ersten Kopplungsabschnitt (12) und dem zweiten Kopplungsabschnitt (13) ist.

## Revendications

1. Composant moulé (1), en particulier structure de squelette interne, pour un ensemble rétroviseur extérieur de véhicule routier, comprenant :
une première section d'accouplement (2) et une seconde section d'accouplement (3), dans lequel la première section d'accouplement (2) et la seconde section d'accouplement (3) sont chacune configurées pour être accouplées à une coque structurale ;
une caractéristique de rupture prédéterminée (4), dans lequel la caractéristique de rupture (4) est formée et configurée de manière à permettre l'accouplement du composant (1) à la coque structurale dans deux états différents (S1, S2),
dans lequel, dans le premier état (S1) du composant (1), la caractéristique de rupture (4) relie structuralement la première section d'accouplement (2) et la seconde section d'accouplement (3) pour un accouplement à la coque structurale en une partie, et dans le second état (S2) du composant (1), la première section d'accouplement (2) et/ou la seconde section d'accouplement (3) sont adaptées en position au moyen de la caractéristique de rupture (4) d'une manière prédéfinie pour un accouplement à la coque structurelle en au moins deux parties ; et
dans lequel le composant (1) dans le premier état (S1) est configuré pour être accouplé à une coque structurale d'une première taille (5) et/ou forme et dans lequel le composant (1) dans le second état (S2) est configure pour être accouplée à une coque structurale d'une seconde taille (6) et/ou forme.

2. Composant moulé selon la revendication 1, dans lequel la coque structurale de la première taille (5) est plus petite que la coque structurale de la seconde taille (6).

3. Composant moulé selon l'une quelconque des revendications précédentes, dans lequel la caractéristique de rupture (4) est disposée entre la première section d'accouplement (2) et la seconde section d'accouplement (3).

4. Composant moulé selon l'une quelconque des revendications précédentes, dans lequel la caractéristique de rupture (4) se présente sous la forme d'un joint, en particulier d'un amincissement du matériau.

5. Composant moulé selon l'une quelconque des revendications précédentes, dans lequel le composant (1) comprend au moins un élément de guidage (21) configuré pour guider la position du composant (1) pour le premier état (S1) et le second état (S2).

6. Composant moulé selon l'une quelconque des revendications précédentes, dans lequel la première section d'accouplement (2) et/ou la seconde section d'accouplement (3) comprennent au moins un élément de positionnement (23) configuré pour définir une position relative de la première section d'accouplement (2) et/ou de la seconde section d'accouplement (3) l'une par rapport à l'autre respectivement.

7. Composant moulé selon l'une quelconque des revendications précédentes, dans lequel le composant (1) comprend au moins un élément de fixation (14) configuré pour recevoir au moins un élément.

8. Composant moulé selon l'une quelconque des revendications précédentes, dans lequel le premier état (S1) et le second état (S2) du composant (1) sont basés sur un système de rupture (22),
dans lequel le système de rupture (22) comprend la caractéristique de rupture (4).

9. Composant moulé selon l'une quelconque des revendications précédentes, dans lequel le composant (1) est configuré pour contenir et mettre en contact électroniquement des actionneurs et des capteurs destinés à être utilisés dans un ensemble rétroviseur extérieur.

10. Composant moulé selon l'une quelconque des revendications précédentes, dans lequel le composant (1) est fabriqué selon un processus de moulage par injection, et
dans lequel le composant (1) est fabriqué dans un seul moule.

11. Ensemble rétroviseur extérieur (10) pour véhicules routiers comprenant :
une coque structurale (11), en particulier une coque de mirroir ;
un composant moulé (1) selon l'une des revendications précédentes 1 à 10 accouplé à la coque structurale (11).

12. Ensemble selon la revendication 11, dans lequel la coque structurale (11) est fabriquée à partir d'un matériau composite fibreux, en particulier un matériau composite en fibres de carbone.

13. Ensemble selon la revendication 11 ou 12, dans lequel la coque structurale (11) comprend une première partie d'accouplement (12) et une seconde partie d'accouplement (13), et
dans lequel la première section d'accouplement (2) est configurée pour être accouplée à une première partie d'accouplement (12) et la seconde section d'accouplement (3) est configurée pour être accouplée à une seconde partie d'accouplement (13).

14. Procédé d'assemblage d'un ensemble rétroviseur extérieur selon la revendication 11, comprenant les étapes suivantes :
la fourniture (M1) d'une coque structurale (11) comprenant une première partie d'accouplement (12) et une seconde partie d'accouplement (13), la première partie d'accouplement (12) et la seconde partie d'accouplement (13) étant espacées à une distance l'une de l'autre ;
la fourniture (M2) d'un composant moulé comprenant :
une première section d'accouplement (2) et une seconde section d'accouplement (3), dans lequel la première section d'accouplement (2) est configurée pour être accouplée à la première partie d'accouplement (12) et la seconde section d'accouplement (3) est configurée pour être accouplée à la seconde partie d'accouplement (13) ; et
une caractéristique de rupture prédéterminé (4), dans lequel la caractéristique de rupture (4) est formée et configurée de manière à permettre l'accouplement du composant (1) à la coque structurale (11) dans deux états différents (S1, S2), dans lequel le composant (1) dans le premier état (S1) est configuré pour être accouplé à une coque structurale d'une première taille (5) et/ou forme et dans lequel le composant (1) dans le second état (S2) est configuré pour être accouplé à une coque structurale d'une seconde taille (6) et/ou forme ;
l'accouplement (M3) du composant moulé (1) à la coque structurale (11) dans un premier état (S1), dans lequel la première section d'accouplement (2) et la seconde section d'accouplement (3) sont reliées structuralement au moyen de l la caractéristique de rupture prédéterminée (4), si la distance entre la première section d'accouplement (2) et la seconde section d'accouplement (3) est égale à la distance entre la première partie d'accouplement (12) et la seconde partie d'accouplement (13), ou
l'adaptation (M4) d'une position de la première section d'accouplement (2) et/ou de la seconde section d'accouplement (3) au moyen la caractéristique de rupture prédéterminé (4), et
l'accouplement (M5) du composant moulé (1) à la coque structurale (11) dans un second état (S2), dans lequel la première section d'accouplement (2) et la seconde section d'accouplement (3) sont adaptables en position, si la distance entre la première section d'accouplement (2) et la seconde section d'accouplement (3) n'est pas égale à la distance entre la première partie d'accouplement (12) et la seconde partie d'accouplement (13).
